# EUROPEAN PATENT APPLICATION

(11) **EP 4 618 176 A1**
(43) Date of publication of application: **17.09.2025**
(21) Application number: 24810233.7
(22) Date of filing: 11.05.2024
(51) Int. Cl.: H01M 4/13, H01M 4/139

(54) **ELECTRODE SHEET AND MANUFACTURING METHOD THEREFOR, BATTERY CELL, BATTERY, AND ELECTRIC DEVICE**

(30) Priority: 22.05.2023 CN 202310579255
(71) Applicant: Contemporary Amperex Technology Co., Limited, Ningde, Fujian 352100 (CN)
(72) Inventor: JI, Xing, Ningde, Fujian 352100 (CN); LI, Ting, Ningde, Fujian 352100 (CN)
(74) Representative: von Tietzen und Hennig, Nikolaus
(86) International application number: PCT/CN2024/092630
(87) International publication number: WO 2024/239986

(57) **Abstract**

The embodiments of the present application provide an electrode sheet and a manufacturing method therefor, a battery cell, a battery, and an electric device, which belong to the technical field of batteries. The electrode sheet comprises a current collector, an active material layer, and a first insulating layer, wherein the current collector comprises a main body part and a tab extending from a first end of the main body part which is the end of the main body part in a first direction, the main body part comprises a coating area and a transition area arranged between the coating area and the tab; the active material layer is arranged on a surface of the coating area; the first insulating layer is arranged on an end surface of the main body part at the first end, and has a thickness d1 of 200 nm to 2000 nm. The technical solution of the present application can improve the reliability of a battery cell.

## Description

### CROSS-REFERENCE TO RELATED APPLICATIONS

The present application claims priority to Patent Application No. 202310579255.7 field on May 22, 2023 and entitled "Electrode Sheet and Manufacturing Method Therefor, Battery Cell, Battery, and Electric Device", which is incorporated herein by reference in its entirety.

### TECHNICAL FIELD

The present application relates to the technical field of batteries, and in particular, to an electrode sheet and a manufacturing method therefor, a battery cell, a battery, and an electric device.

### BACKGROUND

With the increasing severity of environmental pollution, the new energy industry has attracted more and more attention. In the new energy industry, a battery technology is an important factor for the development thereof.

In the development of battery technologies, various design factors need to be taken into consideration, such as energy density, cycle life, reliability, etc. The design of an electrode sheet in a battery cell is crucial to the reliability of the battery cell. Therefore, how to provide an electrode sheet to improve the reliability of a battery cell is an technical problem that needs to be solved urgently.

### SUMMARY

The present application has been made in view of the above problem, and an objective thereof is to provide an electrode sheet to improve the reliability of a battery cell.

In order to achieve the above objective, the present application provides an electrode sheet and a manufacturing method therefor, a battery cell, a battery, and an electric device.

According to a first aspect, there is provided an electrode sheet, comprising a current collector, an active material layer, and a first insulating layer, wherein the current collector comprises a main body part and a tab extending from a first end of the main body part, the first end is the end of the main body part in a first direction, and the main body part comprises a coating area; the active material layer is arranged on a surface of the coating area; the first insulating layer is arranged on an end surface of the main body part at the first end, and has a thickness d1 of 200 nm to 2000 nm.

The embodiments of the present application provide an electrode sheet, comprising a current collector, an active material layer, and a first insulating layer. The current collector comprises a main body part and a tab extending from a first end of the main body part which is the end of the main body part in a first direction. The main body part comprises a coating area, and the active material layer is arranged on a surface of the coating area. The first insulating layer is arranged on an end surface of the main body part at the first end, so that the first insulating layer may cover the end surface at the first end to reduce the risk of exposure of the current collector at the end surface, thereby reducing the risk of the current collector exposed at the end surface overlapping with an electrode of an opposite polarity. Furthermore, the first insulating layer may also cover burrs generated due to a cutting process to reduce the risk of the burrs overlapping with an electrode of an opposite polarity. The thickness d1 of the first insulating layer ranges from 200 nm to 2000 nm, so that the first insulating layer may better cover the burrs and the exposed end surface with a smaller thickness. Therefore, the technical solutions of the embodiments of the present application can improve the reliability of a battery cell.

In one possible implementation, the thickness d1 of the first insulating layer ranges from 200 nm to 500 nm. This facilitates a further reduction of the thickness of the first insulating layer while better covering the burrs and the exposed end surface.

In one possible implementation, the main body part further comprises a transition area arranged between the coating area and the tab. The tab further comprises a second insulating layer, and at least a part of the second insulating layer is arranged on a surface of the transition area. The material of the second insulating layer comprises a thermoplastic polymer.

In the above technical solution, the transition area is arranged between the coating area and the tab, and during the process of cutting the tab, a cutting tool (for example, a laser) may have a certain distance from the active material layer, which may reduce detachment of the active material layer. The second insulating layer is provided on the surface of the transition area, which helps to reduce the risk of the electrode sheet overlapping with an electrode sheet of an opposite polarity. The material of the second insulating layer comprises a thermoplastic polymer. When heated to a certain condition, the thermoplastic polymer changes from a solid state to a flowing state. In this way, the thermoplastic polymer in the flowing state may flow to the burrs and the exposed end surface during the process of cutting the current collector provided with the second insulating layer. After the temperature is lowered, the thermoplastic polymer in the flowing state solidifies at the burrs and the exposed end surface to cover the burrs and the exposed end surface, thereby reducing the risk of the burrs and the exposed end surface overlapping with an electrode of an opposite polarity.

In one possible implementation, the thickness d2 of the second insulating layer ranges from 20 µm to 50 µm; and optionally, the thickness d2 of the second insulating layer ranges from 20 µm to 30 µm.

In the above technical solution, in a case where the thickness d2 of the second insulating layer is not less than 20 µm, there are more thermoplastic polymers in the second insulating layer during the process of cutting the current collector provided with the second insulating layer, so that more thermoplastic polymers may flow to the burrs and the exposed end surface of the current collector after being heated, which is beneficial to cover the exposed end surface and the burrs uniformly and densely; and in a case where the thickness d2 of the second insulating layer does not exceed 50 µm, it is beneficial to reduce the energy consumed in the cutting process and to reduce the burrs generated in the cutting process. Optionally, the thickness d2 of the second insulating layer ranges from 20 µm to 30 µm, which can improve the effect of covering the exposed end surface and the burrs while reducing the energy consumed for cutting and the burrs generated by cutting.

In one possible implementation, the thermoplastic polymer has a drop melting point of 80°C to 200°C. In this way, during the process of cutting the current collector provided with the second insulating layer, the thermoplastic polymer changes from the solid state to the flowing state under the action of the heat generated by the cutting, and the thermoplastic polymer in the flowing state may flow to the end surface of the current collector exposed after the cutting and the burrs generated by the cutting, thereby facilitating the manufacturing of the first insulating layer. Optionally, the drop melting point of the thermoplastic polymer is 150°C to 200°C, which may reduce the risk of the thermoplastic polymer changing to the flowing state due to other factors during the process of not cutting the current collector.

In one possible implementation, the material of the thermoplastic polymer comprises at least one of a crystalline thermoplastic polymer and an amorphous thermoplastic polymer; optionally, the crystalline thermoplastic polymer comprises at least one of polyethylene, polypropylene, and polyamide; and optionally, the amorphous thermoplastic polymer comprises at least one of microcrystalline wax, polystyrene, and polymethyl methacrylate.

In the above technical solution, the use of the thermoplastic polymer above facilitates the formation of a uniform and dense coating on the exposed end surface of the current collector after the cutting and the burrs.

In one possible implementation, the second insulating layer further comprises a binder. The provision of the binder facilitates the bonding of the thermoplastic polymer to the transition area, which may reduce the risk of detachment of the second insulating layer from the transition area.

In one possible implementation, the mass ratio A:B of the thermoplastic polymer to the binder in the second insulating layer is 60:40 to 80:20; and optionally, the mass ratio A:B of the thermoplastic polymer to the binder in the second insulating layer is 70:30 to 80:20.

In the above technical solution, the reasonable setting of the mass ratio of the thermoplastic polymer to the binder in the second insulating layer facilitates the reduction of the risk of detachment of the second insulating layer, and at the same time facilitates the formation of a uniform and dense first insulating layer at the exposed end surface of the current collector and the burrs.

In one possible implementation, the second insulating layer comprises a first portion disposed on the surface of the transition area and a second portion extending from the first portion in the first direction and disposed on a part of a surface of the tab. In this way, the risk of the tab overlapping with an electrode of an opposite polarity can be reduced.

In one possible implementation, end surfaces at both ends of an area of the tab in which the second portion is provided are provided with the first insulating layer in a second direction which differs from the first direction and is optionally perpendicular to the first direction. In this way, the first insulating layer may cover an end surface of the tab exposed due to the cutting, which can reduce the risk of the end surface overlapping with an electrode of an opposite polarity.

In one possible implementation, the material of the first insulating layer is the same as that of the thermoplastic polymer in the second insulating layer. This helps to simplify the manufacturing steps of an electrode sheet and speed up the production rhythm.

In one possible implementation, the thermoplastic polymer in the first insulating layer is film-layered, and the thermoplastic polymer in the second insulating layer comprises a film-layered thermoplastic polymer and a granular thermoplastic polymer. Thus, the first insulating layer is formed after the thermoplastic polymer in the second insulating layer is melted and then solidified. This helps to simplify the manufacturing steps of an electrode sheet, and the first insulating layer can be formed while cutting.

In one possible implementation, the current collector comprises a metal foil or a composite current collector; optionally, the metal foil comprises an aluminum foil or a copper foil; optionally, the composite current collector comprises a polymer material base layer and a metal layer located on at least one surface of the polymer material base layer; and optionally, the current collector comprises an aluminum foil. This facilitates the selection of an appropriate current collector according to actual needs. In a case where the current collector comprises an aluminum foil, the electrode sheet is a positive electrode sheet, which is advantageous in reducing the risk of the positive electrode sheet overlapping with a negative electrode sheet, and in improving the reliability of a battery cell. In addition, it is also conductive to reducing the risk arising from overlapping of the positive electrode sheet with poslithium dendrites precipitated from the negative electrode sheet.

In one possible implementation, the first insulating layer is further arranged on an end surface of the main body part at a second end which is opposite to the first end in the first direction. In this way, the end surface of the main body part at the first end and the end surface at the second end are both provided with the first insulating layer, which is advantageous in further reducing the risk of a short circuit of a battery cell.

According to a second aspect, there is provided a manufacturing method for an electrode sheet, comprising: providing a current collector; coating a first area of the current collector with an active material to form an active material layer in the first area; coating a second area of the current collector with an insulating slurry to form a second insulating layer in the second area, the insulating slurry comprising a thermoplastic polymer and a binder, the second insulating layer having a thickness d2 of 20 µm to 50 µm; and cutting the current collector provided with the second insulating layer along a cutting line, at least a part of the cutting line being disposed in the second area.

In the above technical solution, through the setting of the second insulating layer, the first insulating layer can be formed while cutting, which helps to simplify the manufacturing steps of the first insulating layer.

In one possible implementation, the thickness d2 of the second insulating layer ranges from 20 µm to 30 µm.

In one possible implementation, the thermoplastic polymer has a drop melting point of 80°C~200°C.

In one possible implementation, the material of the thermoplastic polymer comprises at least one of a crystalline thermoplastic polymer and an amorphous thermoplastic polymer; optionally, the crystalline thermoplastic polymer comprises at least one of polyethylene, polypropylene, and polyamide; and optionally, the amorphous thermoplastic polymer comprises at least one of microcrystalline wax, polystyrene, and polymethyl methacrylate.

In one possible implementation, the mass ratio A:B of the thermoplastic polymer to the binder in the insulating slurry is 60:40 to 80:20; and optionally, the mass ratio A:B of the thermoplastic polymer to the binder in the insulating slurry is 70:30 to 80:20.

In one possible implementation, cutting the current collector provided with the second insulating layer along a cutting line comprises: controlling a laser processing tool to cut the current collector provided with the second insulating layer along the cutting line, wherein the laser processing tool has a power of 20 to 200 W, a frequency of 100 to 800 kHz, and a feed speed of 5 m/min to 30 m/min, and optionally, the laser processing tool has a power of 20 to 100 W, a frequency of 100 to 300 kHz, and a feed speed of 5 m/min to 15 m/min.

In the above technical solution, the reasonable control of the use parameters of the laser processing tool is advantageous for obtaining a more uniform and dense first insulating layer, reducing the burrs generated in the cutting process, and reducing the risk of detachment of the second insulating layer.

According to a third aspect, there is provided a battery cell, comprising the electrode sheet according to the first aspect and any one of the possible implementations thereof, and/or the electrode sheet manufactured by the method according to the second aspect and any one of the possible implementations thereof.

According to a fourth aspect, there is provided a battery, comprising the battery cell according to the third aspect.

According to a fifth aspect, there is provided an electric device, comprising the battery according to the fourth aspect.

According to a sixth aspect, there is provided an electrode sheet, comprising a current collector and a first insulating layer, wherein the first insulating layer is arranged on at least a part of an end surface of the current collector, and has a thickness d1 of 200 nm to 2000 nm. Through the provision of the first insulating layer on at least a part of the end surface of the current collector, the risk of a short circuit caused by the end surface and the burrs overlapping with an electrode of an opposite polarity can be reduced; and by setting d1 as 200 nm to 2000 nm, the first insulating layer may better cover at least a part of the end surface with a smaller thickness.

### DESCRIPTION OF DRAWINGS

In order to more clearly illustrate the technical solutions of the embodiments of the present application, the drawings required to be used in the embodiments of the present application will be briefly introduced below. Obviously, the drawings described below are only some embodiments of the present application. For persons of ordinary skill in the art, other drawings can also be obtained from the drawings without creative work.
FIG. 1 is a schematic view of an electrode sheet before processing a tab according to one embodiment of the present application;
FIG. 2 is a schematic view of an electrode sheet according to one embodiment of the present application;
FIG. 3 is a sectional view in a direction A-A in FIG. 2;
FIG. 4 is a sectional view in a direction B-B in FIG. 2;
FIG. 5 is a schematic view of a manufacturing method for an electrode sheet according to one embodiment of the present application;
FIG. 6 is a schematic view of a current collector according to one embodiment of the present application;
FIG. 7 is a schematic view of a current collector coated with an active material layer according to one embodiment of the present application;
FIG. 8 is a schematic view of a current collector coated with a second insulating layer according to one embodiment of the present application;
FIG. 9 is a schematic view of a current collector showing a cutting line according to one embodiment of the present application;
10 is a schematic view of a battery cell according to one embodiment of the present application;
FIG. 11 is a schematic view of a battery according to one embodiment of the present application;
FIG. 12 is a schematic view of an electric device according to one embodiment of the present application;
FIG. 13 is an SEM view of an end surface on which a first insulating layer is provided according to one embodiment of the present application;
FIG. 14 is a schematic view of an electrode sheet according to another embodiment of the present application;
FIG. 15 is a sectional view in a direction A-A in FIG. 14; and
FIG. 16 is a sectional view in a direction C-C in FIG. 14;

Reference signs:
1: electrode sheet; 124: cutting line;10: current collector; 11: active material layer; 121: first insulating layer; 122: second insulating layer; 101: main body part; 102: tab; 1011: coating area; 1012: transition area; 1221: first portion; 1222: second portion.

### DESCRIPTION OF EMBODIMENTS

The implementations specifically disclosing an electrode sheet and a manufacturing method therefor, a battery cell, a battery, and an electric device of the present application are described in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, the method comprises steps (a) and (b), meaning that the method may comprise steps (a) and (b) performed sequentially or steps (b) and (a) performed sequentially. For example, the mentioned method may further comprise step (c), meaning that step (c) may be added to the method in any order, e.g. the method may comprise steps (a), (b) and (c), or steps (a), (c) and (b), or steps (c), (a) and (b), etc.

Unless otherwise specified, the terms "comprising" and "containing" as used herein are meant to be open. For example, the "comprising" and "containing" may mean that other components not listed may be comprised or contained.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

In the development of battery technologies, various design factors, such as energy density, cycle life, discharge capacity, charge/discharge rate, reliability, etc., are simultaneously taken into consideration. The design of an electrode sheet in a battery cell is crucial to the reliability of the battery cell. An electrode sheet generally comprises a current collector and an active material layer and an insulating layer with which different areas of the current collector are coated. After the current collector is coated with the corresponding active material layer and insulating layer, it is necessary to cut the current collector coated with the active material layer and the insulating layer to cut out a tab. During the cutting process, dust and burrs are easily generated, and the burrs may cause the electrode sheet to overlap with an electrode of an opposite polarity, thereby leading to a short circuit.

In some processing methods, the insulating layer with which the current collector is coated is provided as a ceramic coating to reduce burrs that occur during the cutting process. However, this processing method can only reduce the number of burrs which will still exist after the cutting. The burrs may cause the electrode sheet to overlap with an electrode with an opposite polarity, resulting in adverse effects. In addition, an end surface of the current collector is exposed after the cutting, and the exposed end surface has a risk of overlapping with an electrode of an opposite polarity, which may lead to a short circuit of a battery cell and is disadvantageous in improving the reliability of a battery.

In view of this, the present application provides an electrode sheet, comprising a current collector and an active material layer arranged on the current collector, wherein a first insulating layer is provided on the end surface of the current collector exposed after cutting, and has a thickness of 200 nm to 2000 nm. In this way, through the provision of the first insulating layer, the insulating layer may cover the end surface of the current collector exposed after the cutting and the burrs after the cutting to reduce overlapping of the electrode sheet with an electrode of an opposite polarity and reduce the risk of an internal short circuit, thereby improving the reliability of a battery cell. The thickness of the first insulating layer ranges from 200 nm to 2000 nm, so that the first insulating layer may better cover the burrs and the exposed end surfaces with a smaller thickness, so as to further improve the performance of the battery cell.

### [Electrode Sheet]

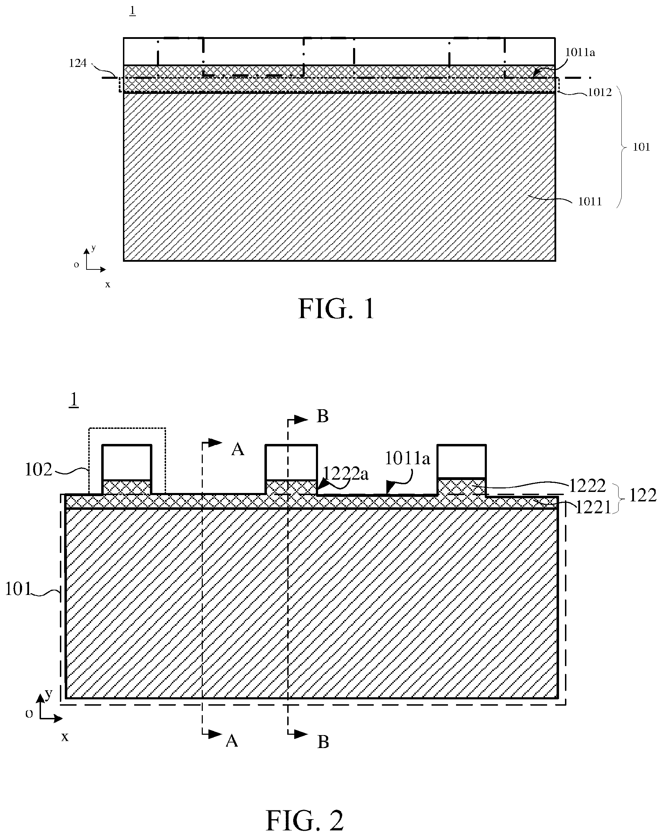

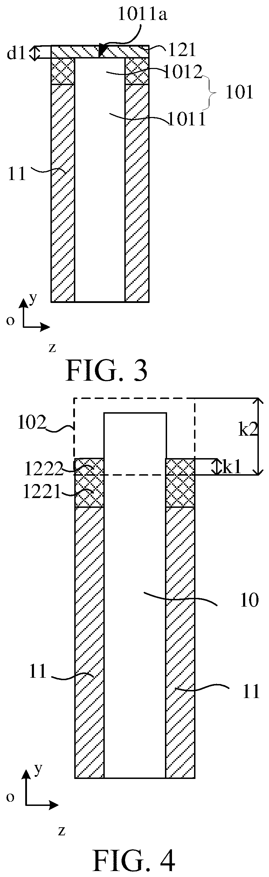

FIG. 1 is a schematic view of an electrode sheet before processing a tab according to one embodiment of the present application, FIG. 2 is a schematic view of an electrode sheet according to one embodiment of the present application, FIG. 3 is a sectional view in a direction A-A in FIG. 2, and FIG. 4 is a sectional view in a direction B-B in FIG. 2.

Referring to FIGS. 1 and 2, FIG. 1 is a schematic view of an electrode sheet before processing a tab, and FIG. 2 is a schematic view of the electrode sheet after processing the tab. As shown in FIG. 1, a black dotted line 124 is a cutting line for cutting the tab, and after cutting along the cutting line 124, an electrode sheet 1 as shown in FIG. 2 is obtained.

Referring to FIGS. 1 to 4, the electrode sheet 1 comprises a current collector 10 and an active material layer 11.

The current collector 10 has two surfaces opposed in its thickness direction, and the active material layer 11 may be arranged on at least one of the two surfaces of the current collector 10 opposed in the thickness direction. For example, as shown in FIGS. 3 and 4, the active material layer 11 is provided on the two surfaces of the current collector 10 opposed in the thickness direction thereof.

The thickness direction of the current collector 10 may be a z direction shown in FIGS. 3 and 4.

The current collector 10 comprises a main body part 101 and a tab 102, wherein the tab 102 extends from a first end of the main body part 101 which is the end of the main body part 101 in a first direction.

The first direction is parallel to a plane in which the current collector 10 is located, and the first direction is a direction in which the tab 102 protrudes with respect to the main body part 101. For example, the first direction is a y direction in FIG. 2.

The main body part 101 comprises a coating area 1011, and the active material layer 11 is arranged on a surface of the coating area 1011. For example, as shown in FIGS. 3 and 4, the active material layer 11 is provided on two surfaces of the current collector 10 in the thickness direction. In some embodiments, the active material layer 11 may be provided on one of the two surfaces of the current collector 10 in the thickness direction.

A first insulating layer 121 is provided on an end surface 1011a of the main body part 101 at the first end, and has a thickness d1 of 200 nm to 2000 nm. For example, d1 may be 200 nm, 300 nm, 400 nm, 500 nm, 800 nm, 1000 nm, 1500 nm, 2000 nm, or any value within the above range.

The end surface 1011a of the main body part 101 at the first end is a surface parallel to the thickness direction of the current collector 10. For example, as shown in FIG. 3, the end surface 1011a is a surface parallel to an x direction and the z direction.

The end surface 1011a of the main body part 101 at the first end may be formed by the following process: referring to FIG. 1, during the process of cutting the current collector 10, the current collector 10 is cut along a cutting line 124, and the end surface 1011a is a cut end surface of the transition area 1012. After the cutting, the current collector at the end surface 1011a is exposed and may be accompanied by burr generation.

By providing the first insulating layer 121 at the end surface 1011a, the first insulating layer 121 may cover burrs generated during the cutting process to reduce the risk of the burrs overlapping with an electrode of an opposite polarity. For example, after the electrode sheet 1 and an electrode sheet of an opposite polarity (for example, the electrode sheet 1 is a positive electrode sheet and the electrode sheet of the opposite polarity is a negative electrode sheet) are assembled into an electrode assembly by way of winding or laminating, and the electrode assembly, an end cap assembly, and a housing are assembled into a battery cell, the burrs may overlap with the electrode sheet of the opposite polarity, which may result in a self-discharge abnormality of the battery cell. Through the provision of the first insulating layer 121, the first insulating layer 121 may cover the burrs, so as to reduce the risk of a self-discharge abnormality or the like caused by the burrs overlapping with an electrode of an opposite polarity.

By providing the first insulating layer 121 at the end surface 1011a, the first insulating layer 121 may cover the exposed end surface 1011 a of the current collector 10 after the cutting, so as to reduce the risk of the end surface 1011 a overlapping with an electrode of an opposite polarity. For example, if the electrode sheet 1 is a positive electrode sheet, then through the provision of the the first insulating layer 121, the risk of an internal short circuit of the battery cell caused by overlapping of the electrode sheet 1 with a negative electrode sheet can be reduced.

The smaller the thickness d1 of the first insulating layer 121, the smaller the space occupied by the electrode sheet 1, which is advantageous for improving the volumetric energy density of the battery cell. By setting the thickness d1 of the first insulating layer 121 to 200 nm to 2000 nm, the first insulating layer 121 may better cover the burrs and the exposed end surface 1011a with a smaller thickness, thereby facilitating further improvement of the performance of the battery cell.

The thickness d1 of the first insulating layer 121 is an average thickness of the first insulating layer 121 in the thickness direction of the current collector 10. For example, the thickness d1 is an average value of a maximum dimension and a minimum dimension of the first insulating layer 121 in the thickness direction.

The thickness d1 of the first insulating layer 121 may be measured in the following manner: photographing the end surface 1011a of the electrode sheet 1 with a scanning electron microscope (SEM), and measuring the thickness d1 of the first insulating layer 121 through an obtained photograph.

The embodiments of the present application provide an electrode sheet 1, comprising a current collector 10, an active material layer 11, and a first insulating layer 121. The current collector 10 comprises a main body part 101 and a tab 102, wherein the tab 102 extends from a first end of the main body part 101 which is the end of the main body part 101 in a first direction. The main body part 101 comprises a coating area 1011, and the active material layer 11 is arranged on a surface of the coating area 1011. The first insulating layer 121 is arranged on an end surface 1011a of the main body part 101 at the first end, so that the first insulating layer 121 may cover the end surface1011a at the first end to reduce the risk of exposure of the current collector 10 at the end surface 1011a, thereby reducing the risk of the current collector 10 exposed at the end surface 1011a overlapping with an electrode of an opposite polarity. Furthermore, the first insulating layer 121 may also cover the burrs generated due to the cutting process to reduce the risk of the burrs overlapping with an electrode of an opposite polarity. The thickness d1 of the first insulating layer 121 ranges from 200 nm to 2000 nm, so that the first insulating layer 121 may better cover the burrs and the exposed end surface 1011a with a smaller thickness. Therefore, the technical solutions of the embodiments of the present application can improve the reliability of a battery cell.

In some embodiments, the thickness d1 of the first insulating layer 121 ranges from 200 nm to 500 nm. This facilitates a further reduction of the thickness of the first insulating layer 121 while better covering the burrs and the exposed end surface 1011a.

In some embodiments, the main body part 101 further comprises a transition area 1012 arranged between the coating area 1011 and the tab 102. The electrode sheet 1 further comprises a second insulating layer 122. At least a part of the second insulating layer 122 is arranged on the surface of the transition area 1012. The material of the second insulating layer 122 comprises a thermoplastic polymer.

The transition area 1012 is arranged between the coating area 1011 and the tab 102, so that a cutting tool (for example, a laser) may have a certain distance from the active material layer 11 during the process of cutting the tab 102, which may reduce detachment of the active material layer 11.

At least a part of the second insulating layer 122 being arranged on the surface of the transition area 1012 means that in addition to being arranged on the surface of the transition area 1012, the second insulating layer 122 may be arranged in other areas not coated with the active material layer 11. For example, the second insulating layer 122 may also be arranged in a partial area of the tab 102.

The thermoplastic polymer may refer to a polymer that softens when heated, solidifies when cooled, and may soften again. For example, the thermoplastic polymer changes from solid particles to a flowable state when heated to a certain temperature, and may change to a layered or film-layered thermoplastic polymer when cooled.

The second insulating layer 122 is provided on the surface of the transition area 1012, which is conductive to reducing of the risk of the electrode sheet 1 overlapping with the electrode sheet 1 of an opposite polarity.

When heated to a certain condition, the thermoplastic polymer in the second insulating layer 122 changes from a solid state to a flowing state. In this way, the thermoplastic polymer in the flowing state may flow to the burrs and the exposed end surface 1011a during the process of cutting the current collector 10 provided with the second insulating layer 122. After the temperature is lowered, the thermoplastic polymer in the flowing state solidifies at the burrs and the exposed end surface 1011a to cover the burrs and the exposed end surface 1011a, thereby reducing the risk of the burrs and the exposed end surface 1011a overlapping with an electrode of an opposite polarity.

In some embodiments, the thickness d2 of the second insulating layer 122 ranges from 20 µm to 50 µm. For example, d2 is 20 µm, 25 µm, 30 µm, 40 µm, 45 µm, 50 µm, or any value within the above range.

In a case where the thickness d2 of the second insulating layer 122 is not less than 20 µm, there are more thermoplastic polymers in the second insulating layer 122 during the process of cutting the current collector 10 provided with the second insulating layer 122, so that more thermoplastic polymers may flow to the burrs and the exposed end surface 1011a of the current collector 10 after being heated, which is beneficial to cover the exposed end surface 1011a and the burrs uniformly and densely.

In a case where the thickness d2 of the second insulating layer 122 does not exceed 50 µm, it is beneficial to reduce the energy consumed in the cutting process and to reduce the burrs generated in the cutting process.

Optionally, the thickness d2 of the second insulating layer 122 ranges from 20 µm to 30 µm, which can improve the effect of covering the exposed end surface 1011a and the burrs while reducing the energy consumed for cutting and the burrs generated by cutting.

In some embodiments, the thermoplastic polymer has a drop melting point of 80°C to 200°C. For example, the drop melting point of the thermoplastic polymer is 80°C, 100°C, 150°C, 200°C, or any value within the above range.

The drop melting point of the thermoplastic polymer is not less than 80°C, which can reduce the risk of melting or flowing of the thermoplastic polymer due to heating of the electrode sheet 1 during other processing processes. The drop melting point of the thermoplastic polymer does not exceed 200°C, which can reduce the risk of the thermoplastic polymer failing to change to the flowing state during the cutting process, and thus reduce the risk of failing to form the first insulating layer 121 at the end surface 1011a.

The drop melting point of the thermoplastic polymer is the temperature at which the thermoplastic polymer changes from a solid or semi-solid state to a liquid state.

During the process of cutting the current collector 10 provided with the second insulating layer 122, the thermoplastic polymer changes from the solid state to the flowing state under the action of the heat generated by the cutting, and the thermoplastic polymer in the flowing state may flow to the end surface 1011a of the current collector 10 exposed after the cutting and the burrs generated by the cutting, so as to facilitate the manufacturing of the first insulating layer 121.

Optionally, the drop melting point of the thermoplastic polymer is 150°C to 200°C, which can reduce the risk of the thermoplastic polymer changing to the flowing state due to other factors during the process of not cutting the current collector 10.

In some embodiments, the material of the thermoplastic polymer comprises at least one of a crystalline thermoplastic polymer and an amorphous thermoplastic polymer; optionally, the crystalline thermoplastic polymer comprises at least one of polyethylene, polypropylene, and polyamide; and optionally, the amorphous thermoplastic polymer comprises at least one of microcrystalline wax, polystyrene, and polymethyl methacrylate.

The drop melting point of the crystalline thermoplastic polymer may refer to the melting point of the crystalline thermoplastic polymer. The drop melting point of the amorphous thermoplastic polymer may refer to the glass transition temperature of the amorphous thermoplastic polymer.

In the above technical solution, the use of the thermoplastic polymer above facilitates the formation of a uniform and dense coating on the exposed end surface 1011a of the current collector 10 after the cutting and the burrs. Moreover, the above thermoplastic polymer has high insulation and pressure resistance, and when the electrode sheet 1 is immersed in an electrolyte solution, the thermoplastic polymer does not electrochemically react with the electrolyte solution.

In some embodiments, the second insulating layer 122 further comprises a binder. The provision of the binder in the second insulating layer 122 facilitates coating the current collector 10 with a corresponding slurry to form the second insulating layer 122, facilitates the bonding of the thermoplastic polymer to the current collector 10 or the transition area 1012, and may reduce the risk of detachment of the second insulating layer 122 from the current collector 10 or the transition area 1012.

In some embodiments, the mass ratio A:B of the thermoplastic polymer to the binder in the second insulating layer 122 is 60:40 to 80:20. For example, A:B is 60:40, 70:30, 75:25, 80:20, or any value within the above range.

In the above technical solution, the reasonable setting of the mass ratio of the thermoplastic polymer to the binder in the second insulating layer 122 facilitates the reduction of the risk of detachment of the second insulating layer 122, and at the same time facilitates the formation of a uniform and dense first insulating layer 121 at the exposed end surface 1011a of the current collector10 and the burrs.

Optionally, the mass ratio A:B of the thermoplastic polymer to the binder in the second insulating layer 122 is 70:30 to 80: 20.

In some embodiments, the second insulating layer 122 comprises a first portion 1221 disposed on the surface of the transition area 1012 and a second portion 1222 extending from the first portion in the first direction and disposed on a part of the surface of the tab 102. In this way, the risk of the tab 102 overlapping with an electrode of an opposite polarity can be reduced.

In some embodiments, end surfaces 1222a at both ends of an area of the tab 102 in which the second portion 1222 is provided are provided with the first insulating layer 121 in a second direction that is different from the first direction.

In a case where the electrode sheet 1 comprises a plurality of tabs 102, the second direction may be a direction in which the plurality of tabs 102 are arranged. For example, as shown in FIG. 2, the second direction is the x direction.

During the process of cutting the current collector 10 along the cutting line 124 to manufacture the tab 102, a cutting tool passes through the area of the second portion 1222, and after the cutting, the end surface 1222a of the area in the second direction is exposed. By providing the first insulating layer 121 at the end surface 1222a, the risk of the end surface 1222a overlapping with an electrode of an opposite polarity can be reduced.

Optionally, the first insulating layer 121 arranged on the end surfaces 1222a at both ends of the area of the second portion 1222 is formed in the process of cutting the current collector 10.

Optionally, the second direction is perpendicular to the first direction. This facilitate cutting of the tab 102.

In some embodiments, the material of first insulating layer 121 is the same as that of the thermoplastic polymer in second insulating layer 122. This helps to simplify the manufacturing steps of the electrode sheet 1 and speed up the production rhythm.

For example, the current collector 10 coated with the active material layer 11 may be cut first, and then a hot-melt tool (such as a hot-melt gun) is used to manufacture the first insulating layer 121 at the end surface 1011a and to manufacture the second insulating layer 122 at the transition area 1012 and a partial area of the tab 102. In this way, the first insulating layer 121 and the second insulating layer 122 can be simultaneously manufactured in one step.

For another example, the active material layer 11 and the second insulating layer 122 are first manufactured on the current collector 10, and the first insulating layer 121 is manufactured simultaneously during the cutting process. In this way, the tab 102 can be produced by cutting in one step, and the first insulating layer 121 is simultaneously manufactured.

In some embodiments, the thermoplastic polymer in the first insulating layer 121 is film-layered, and the thermoplastic polymer in the second insulating layer 122 comprises a film-layered thermoplastic polymer and a granular thermoplastic polymer. Thus, the first insulating layer 121 is formed after the thermoplastic polymer in the second insulating layer 122 is melted and then solidified. In this way, the thermoplastic polymer in the second insulating layer 122 changes to a flowing state, and then flows to the end surface 1011a and solidifies at the end surface 1011a to form the first insulating layer 121. This helps to simplify the manufacturing steps of the electrode sheet 1, and the first insulating layer 121 can be formed while manufacturing the tab 102 by cutting.

At least a part of the granular thermoplastic polymer is retained in the second insulating layer 122; and in the first insulating layer 121, the thermoplastic polymer is film-layered and has almost no particle shape.

The granular thermoplastic polymer may have a variety of shapes, such as spherical, rod-like, and lamellar. Here, the granular thermoplastic polymer means that the thermoplastic polymer does not change to the flowing state but is in the solid state.

Before cutting the second insulating layer 122, the thermoplastic polymer in the second insulating layer 122 is granular. During the process of cutting the second insulating layer 122, a part of the thermoplastic polymer in the second insulating layer 122 changes from the solid state to the flowing state (e.g., a part of the thermoplastic polymer near the cutting line 124 changes to the flowing state), and the other part of the thermoplastic polymer remains as solid particles.

In some embodiments, the current collector 10 comprises a metal foil or a composite current collector. This facilitates setting the material of the current collector 10 according to actual needs.

Optionally, the metal foil comprises an aluminum foil or a copper foil.

Optionally, the composite current collector comprises a polymer material base layer and a metal layer located on at least one surface of the polymer material base layer.

Optionally, the current collector comprises an aluminum foil. In this way, the electrode sheet 1 is a positive electrode sheet, which is advantageous in reducing the risk of the positive electrode sheet overlapping with a negative electrode sheet, and in improving the reliability of the battery cell. In addition, it is also conductive to reducing the risk arising from overlapping of the positive electrode sheet with poslithium dendrites precipitated from the negative electrode sheet.

In some embodiments, the first insulating layer 121 is further disposed on an end surface of the main body part 101 at a second end which is opposite to the first end in the first direction.

The main body part 101 has two opposite ends in the first direction, wherein the two ends are the first end and the second end, respectively. The tab 102 protrudes from the main body part 101 at the first end, and the second end is opposite to the first end in the first direction.

The end surface of the main body part at the second end and the end surface at the first end are both provided with the first insulating layer 121, which is advantageous to reduce the risk of an internal short circuit in a battery cell caused by overlapping of the end surface at the first end and the end surface at the second end with an electrode of an opposite polarity, and is advantageous to further improve the reliability of the battery cell.

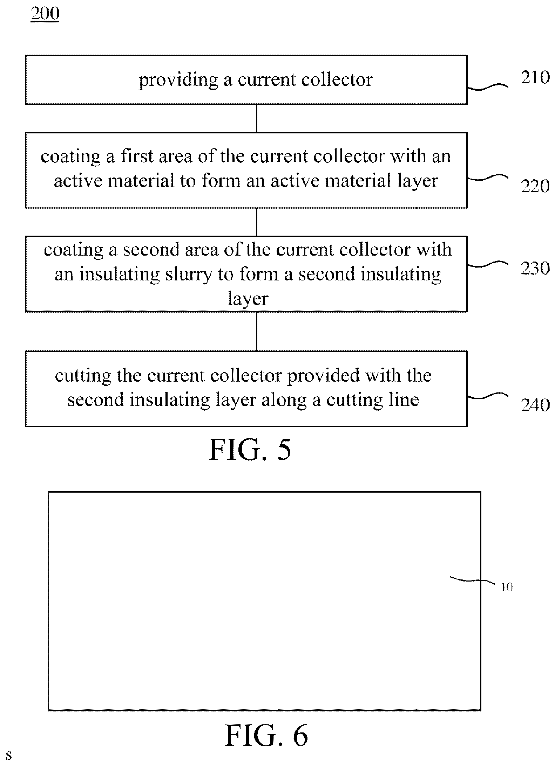

The technical solution of the electrode sheet is described above with reference to FIGS. 1 to 4, and a manufacturing method for the electrode sheet is described below with reference to FIG. 5, wherein reference may be made to the above for a part corresponding to the electrode sheet, which will not be repeated here.

### [Manufacturing Method for Electrode Sheet]

FIG. 5 is a schematic view of a method for manufacturing an electrode sheet according to one embodiment of the present application. The method 200 may be used to prepare the electrode sheet 1 in the above embodiments. The method 200 comprises the following steps.

At step 210, a current collector 10 is provided.

FIG. 6 is a schematic view of a current collector according to one embodiment of the present application. For example, as shown in FIG. 6, the current collector 10 is in the shape of a sheet or a rectangle. The shape and size of the current collector 10 may be set according to actual requirements, which are included in the embodiments of the present application but are not limited thereto.

At step 220, a first area of the current collector 10 is coated with an active material to form an active material layer 11 in the first area.

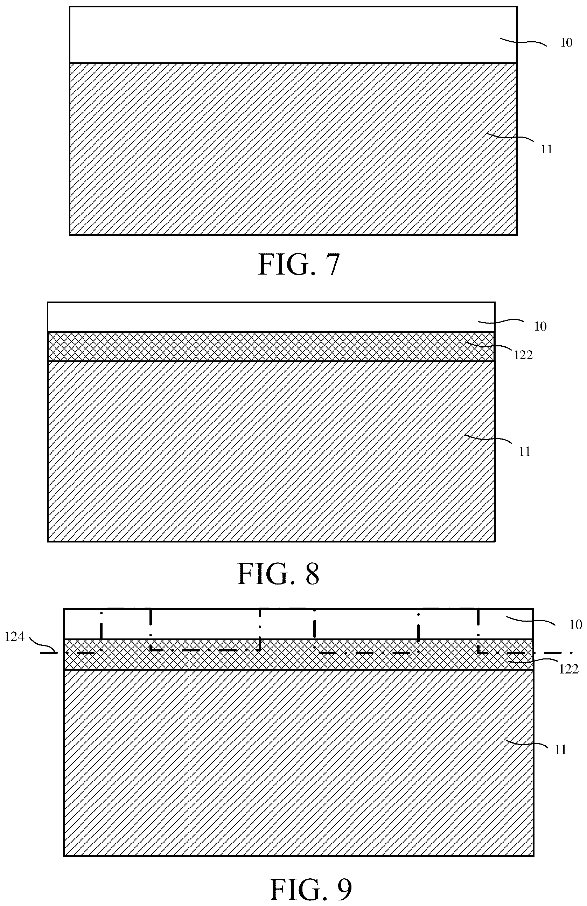

FIG. 7 is a schematic view of a current collector coated with an active material layer according to one embodiment of the present application. As shown in FIG. 7, the first area of the current collector 10 is coated with the active material to obtain the current collector 10 provided with the active material layer 11.

The first area of the current collector 10 may be an area which is set according to actual requirements. In the embodiments of the present application, the first area corresponds to the coating area 1011 of the main body part 101 of the electrode sheet 1.

At step 230, a second area of the current collector 10 is coated with an insulating slurry to form a second insulating layer 122 in the second area. The insulating slurry comprises a thermoplastic polymer and a binder. The thickness d2 of the second insulating layer 122 ranges from 20 µm to 50 µm.

FIG. 8 is a schematic view of a current collector coated with a second insulation layer according to one embodiment of the present application. As shown in FIG. 8, the second area of the current collector 10 is coated with the insulating slurry to obtain the current collector 10 provided with the second insulating layer 122.

The size of the second area may be set according to actual requirements. In the embodiments of the present application, the second area corresponds to the transition area 1012 of the main body part 101 of the electrode sheet 1 and an area of the tab 102 in which the second insulating layer 122 is provided.

At step 240, the current collector 10 provided with the second insulating layer 122 is cut along a cutting line, wherein at least a part of the cutting line 124 is disposed in the second area.

FIG. 9 is a schematic view of a current collector showing a cutting line according to one embodiment of the present application. As shown in FIG. 9, the current collector 10 is cut along the cutting line 124 so as to obtain the electrode sheet 1 shown in FIGS. 2 to 4.

In the above technical solution, through the provision of the second insulating layer 122, the first insulating layer 121 can be formed while cutting, which helps to simplify the manufacturing steps of the first insulating layer 121.

In some embodiments, the thickness d2 of the second insulating layer 122 ranges from 20 µm to 30 µm.

In some embodiments, the thermoplastic polymer has a drop melting point of 80°C to 200°C.

In some embodiments, the material of the thermoplastic polymer comprises at least one of a crystalline thermoplastic polymer and an amorphous thermoplastic polymer; optionally, the crystalline thermoplastic polymer comprises at least one of polyethylene, polypropylene, and polyamide; and optionally, the amorphous thermoplastic polymer comprises at least one of microcrystalline wax, polystyrene, and polymethyl methacrylate.

In some embodiments, the mass ratio A:B of the thermoplastic polymer to the binder in the insulating slurry is 60:40 to 80:20; and optionally, the mass ratio A:B of the thermoplastic polymer to the binder in the insulating slurry is 70:30 to 80:20.

In some embodiments, step 240 comprises: controlling a laser processing tool to cut the current collector 10 provided with the second insulating layer 122 along the cutting line, wherein the laser processing tool has a power of 20 to 200 W, a frequency of 100 to 800 kHz, and a feed speed of 5 m/min to 30 m/min, and optionally, the laser processing tool has a power of 20 to 100 W, a frequency of 100 to 300 kHz, and a feed speed of 5 m/min to 15 m/min.

The power of the laser processing tool may be 20 W, 50 W, 100 W, 200 W, or any value within the above range, the frequency may be 100 kHz, 200 kHz, 300 kHz, 500 kHz, 800 kHz, or any value within the above range, and the feed speed may be 5 m/min, 15 m/min, 20 m/min, 30 m/min, or any value within the above range.

In the above technical solution, the reasonable control of the use parameters of the laser processing tool is advantageous for obtaining a more uniform and dense first insulating layer 121, reducing the burrs generated in the cutting process, and reducing the risk of detachment of the second insulating layer 122.

In some embodiments, the electrode sheet 1 may further be manufactured by the following method: providing a current collector 10; coating a first area of the current collector 10 with an active material to form an active material layer 11 in the first area; coating a second area of the current collector 10 with an insulating slurry to form a second insulating layer 122 in the second area; cutting the current collector 10 provided with the second insulating layer 122 along a cutting line, at least a part of the cutting line being disposed in the second area; and controlling a hot-melt tool to coat an end surface resulting from the cutting with a melted thermoplastic polymer to manufacture the first insulating layer 121, wherein the material of the second insulating layer 122 is not specifically limited, which may be aluminum oxide, boehmite, or the like.

In some embodiments, the electrode sheet 1 may further be manufactured by the following method: providing a current collector 10; coating a first area of the current collector 10 with an active material to form an active material layer 11 in the first area; cutting the current collector 10 provided with the active material layer 11 along a cutting line, at least a part of the cutting line being disposed in the second area; and controlling a hot-melt tool to coat an end surface resulting from the cutting and the second area of the current collector 10 with a melted thermoplastic polymer to manufacture the first insulating layer 121 and the second insulating layer 122.

### [Positive Electrode Sheet]

The electrode sheet 1 in the embodiments of the present application may be a positive electrode sheet. The positive electrode sheet comprises a positive electrode current collector and a positive electrode film layer disposed on the positive electrode current collector.

The positive electrode current collector may be a metal foil, or may be a composite current collector. For example, the positive electrode current collector may be an aluminum foil.

The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

The positive electrode film layer comprises a positive electrode active material. The positive electrode active material may use a positive electrode active material for a battery known in the art. For example, the positive electrode active material is lithium iron phosphate, a ternary material, a lithium-rich manganese-based material, or the like. As an example, the positive electrode active material is a ternary material, and further, a ternary material of a high nickel system, for example, LiNi_{0.6}Co_{0.2}Mn_{0.2}O₂, LiNi_{0.8}Co_{0.1}Mn_{0.1}O₂.

The positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

The positive electrode film layer further optionally comprises a conductive agent. The conductive agent may be selected from at least one of superconducting carbon, acetylene black, carbon black, Ketjen black, carbon dots, carbon nanotubes, graphene, and carbon nanofibers.

### [Negative Electrode Sheet]

The electrode sheet 1 in the embodiments of the present application may be a negative electrode sheet. The negative electrode sheet comprises a negative electrode current collector and a negative electrode film layer disposed on the negative electrode current collector.

The negative electrode current collector may be a metal foil, or may be a composite current collector. The negative electrode current collector may be a copper foil. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

The negative electrode film layer comprises a negative electrode active material. The negative electrode active material may use a negative electrode active material for a battery known in the art. As an example, the negative electrode active material may comprise at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the application application is not limited to these materials, and other conventional materials that can be used as negative electrode active materials of a battery may also be used. These negative electrode active materials may be used alone or in combination of two or more thereof.

The negative electrode film layer further optionally comprises a conductive agent. The conductive agent may be selected from at least one of superconducting carbon, acetylene black, carbon black, Ketjen black, carbon dots, carbon nanotubes, graphene, and carbon nanofibers.

### [Electrolyte]

The electrolyte functions to conduct ions between the positive electrode sheet and the negative electrode sheet. The type of the electrolyte is not specifically limited in the embodiments of the present application, and may be selected as required. For example, the electrolyte may be liquid, gelled or all solid.

In some embodiments, the electrolyte uses an electrolyte solution. The electrolyte solution includes an electrolyte salt and a solvent.

The electrolyte salt may comprise at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

The solvent may comprise at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, ethyl methyl sulfone, and diethyl sulfone.

The electrolyte further optionally comprises a negative electrode film-forming additive, a positive electrode film-forming additive, and may further comprise a performance additive capable of improving certain performances of the battery, such as a performance additive for improving the overcharge performance of the battery, a performance additive for improving the high-temperature or low-temperature performance of the battery, and the like.

### [Separation Film]

A separation film is used to separate a positive electrode sheet from a negative electrode sheet. The type of the separation film is not particularly limited in the embodiments of the present application, and any well-known porous separation film having good chemical stability and mechanical stability may be selected.

The material of the separation film may be selected from at least one of glass fibers, nonwoven fabrics, polyethylene, polypropylene, and polyvinylidene fluoride. The separation film may be a single-layer thin film, or may be a multi-layer composite thin film, which is not particularly limited. When the separation film is a multi-layer composite thin film, materials of each layer may be the same or different, which is not particularly limited.

The positive electrode sheet, the negative electrode sheet, and the separation film may be made into an electrode assembly through a winding process or a lamination process.

### [Battery cell]

The embodiments of the present application provide a battery cell, comprising the electrode sheet 1 in the above embodiments and/or the electrode sheet manufactured by the method in the above embodiments.

The shape of the battery cell is not particularly limited in the embodiments of the present application, and may be a cylindrical shape, a square shape, or any other shape. The battery cell may be a lithium ion battery, a lithium sulfur battery, a sodium ion battery, a magnesium ion battery, or the like.

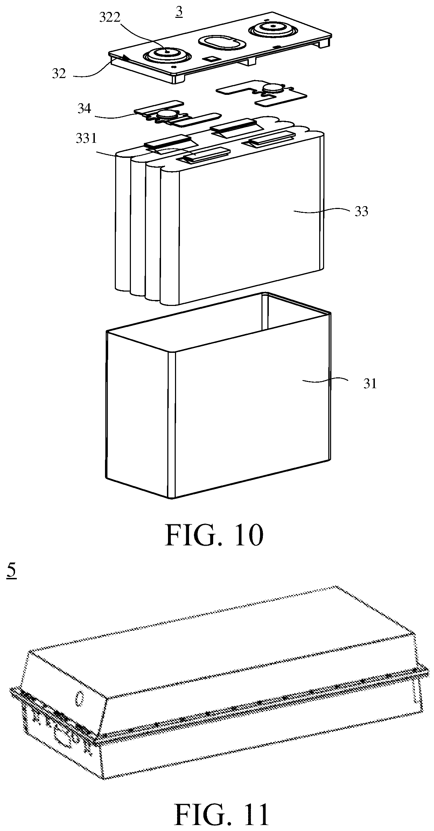

FIG. 10 is a schematic view of a battery cell according to one embodiment of the present application; For example, as shown in FIG. 10, the battery cell 3 is a square battery cell. The battery cell 3 comprises a housing 31, an end cap assembly 32, and an electrode assembly 33 disposed in the housing 31.

The electrode assembly 33 may be made by the positive electrode sheet, the negative electrode sheet, and the separation film through a winding process or a lamination process. In some embodiments, the positive electrode sheet is the electrode sheet 1 in the embodiments of the present application.

The end cap assembly 32 comprises electrode terminals 322. For example, as shown in FIG. 10, the end cap assembly 32 comprises two electrode terminals 322, one of which is a positive electrode terminal and the other is a negative electrode terminal.

The battery cell 3 further comprises a current collecting member 34 for connecting a tab part 331 of the electrode assembly 33 and the electrode terminals 322. For example, in a case where the electrode sheet 1 according to the embodiments of the present application is a positive electrode sheet, one current collecting member 34 is used to connect a positive electrode tab part (which may be the tab 102 of the electrode sheet 1) and a positive electrode terminal, and another current collecting member 34 is used to connect a negative electrode tab and a negative electrode terminal.

In some embodiments, the battery cell may be assembled into a battery module. There may be one or more battery cells included in the battery module, and the specific number may be selected by those skilled in the art according to the application and capacity of the battery module.

### [Battery]

The embodiments of the present application provide a battery, comprising the battery cell in the above embodiments. FIG. 11 is a schematic view of a battery according to one embodiment of the present application. As shown in FIG. 11, the battery 5 may comprise a plurality of battery cells (not shown in the figure).

The battery cell 3 may directly constitute the battery 5, or may constitute a battery module, and then the battery 5 is constituted by a plurality of battery modules.

### [Electric Device]

The embodiments of the present application provide an electric device, comprising the battery in the above embodiments.

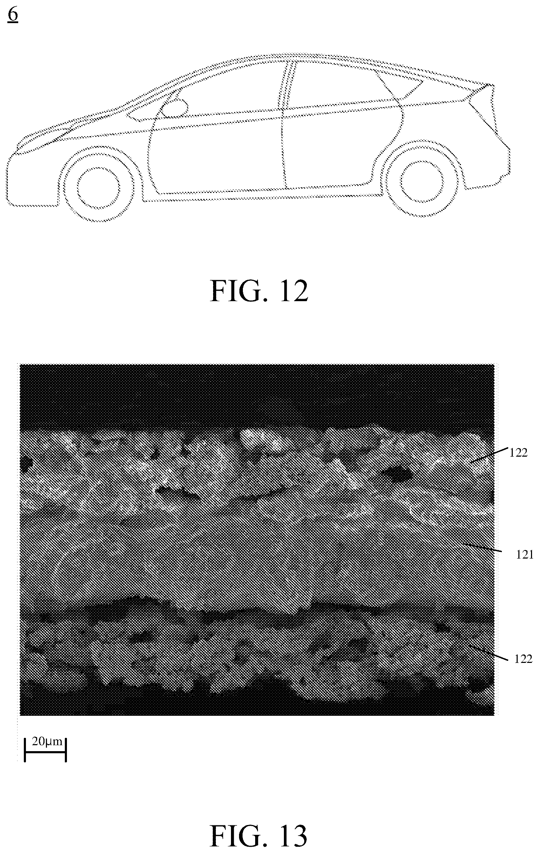

FIG. 12 is a schematic view of an electric device according to one embodiment of the present application; As shown in FIG. 12, the present application provides an electric device 6, comprising the battery in the above embodiments.

Optionally, the electric device may also be an energy storage device, a lighting device, a spacecraft, and the like, which are included in the embodiments of the present application but are not limited thereto.

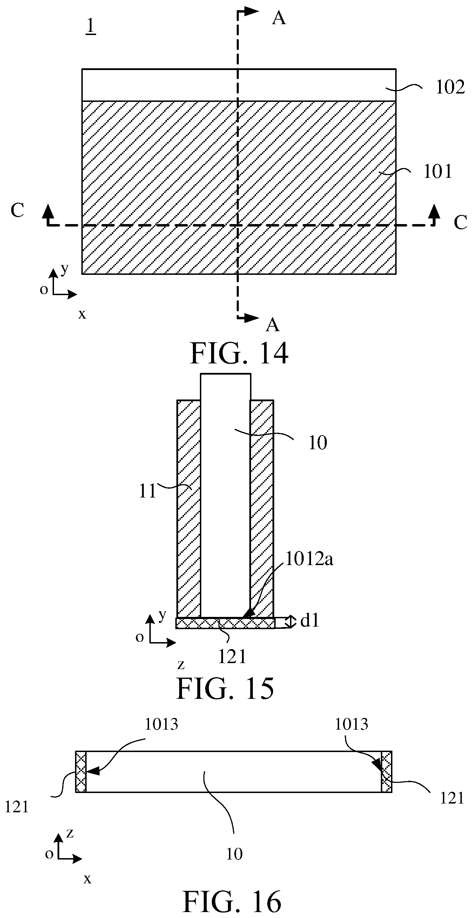

FIG. 14 is a schematic view of an electrode sheet according to another embodiment of the present application, FIG. 15 is a sectional view in a direction A-A in FIG. 14, and FIG. 16 is a sectional view in a direction C-C in FIG. 14. As shown in FIGS. 14 to 16, the embodiments of the present application provide an electrode sheet, 1 comprising a current collector 10 and a first insulating layer 121, wherein the first insulating layer 121 is arranged on at least a part of an end surface of the current collector 10 and has a thickness d1 of 200 nm to 2000 nm.

The electrode sheet 1 comprises a current collector 10 and a first insulating layer 121, and may further comprises an active material layer 11.

As one example, the current collector 10 comprises a main body part 101 and a tab 102 which is an exposed foil (for example, an aluminum foil) and protrudes from the main body part 101. The surfaces on both sides of the main body part 101 in its own thickness direction are both provided with the active material layer 11. The first insulating layer 121 is provided on an end surface 1012a at one end of the main body part 101 in a first direction which is a direction in which the tab 102 protrudes from the main body part 101. By providing the first insulating layer 121 on the end surface 1012a at one end of the main body part 101 in the first direction, the first insulating layer 121 may cover the burrs at the end surface 1012a to reduce the risk of an internal short circuit in a battery cell caused by the burrs piercing the separation film, and reduce the risk of a short circuit caused by the end surface 1012a overlapping with an electrode of an opposite polarity.

In an example shown in FIG. 14, the tab 102 does not need to be formed by cutting. As an example, the first insulating layer 121 may be formed by coating the end surface 1012a of the current collector 10 by means of a hot-melt tool. As another example, the surface of the current collector 10 may be coated with a film layer comprising the thermoplastic polymer, and the current collector may be heated to obtain the first insulating layer 121.

As another example, the end surface 1013 of the current collector 10 in the second direction and the end surface 1012a in the first direction are both provided with the first insulating layer 121, the second direction being perpendicular to the first direction. For example, the first direction is the y direction in the figures, and the second direction is the x direction in the figures. In this way, the risk of an internal short circuit in the battery cell caused by the burrs on the current collector 10 piercing the separation film can be further reduced, and the risk of a short circuit caused by each end surface overlapping with an electrode of an opposite polarity can be reduced.

For the description of the first insulating layer 121, reference may be made to the above description, which will not be repeated here.

Embodiments of the present application are described below. The example described below are illustrative only and are not to be construed as limiting the present application. In the embodiments, specific techniques or conditions are not indicated, and they are performed according to techniques or conditions described in documents in the art or according to the specification of the product. The reagents or instruments used without specifying the manufacturer(s) are conventional products that are commercially available.

### [Embodiments]

### Embodiment 1

In Embodiment 1, the structure of the electrode sheet 1 may be shown in FIG. 2. The thickness d1 of the first insulating layer 121 was 200 nm, and the thickness d2 of the second insulating layer 122 was 20 µ m. In the second insulating layer 122, the material of the thermoplastic polymer was microcrystalline wax. The drop melting point of microcrystalline wax was 80 °C. The mass ratio A:B of the thermoplastic polymer to the binder was 80:20.

### Embodiments 2-6

Embodiments 2-6 differed from Embodiment 1 in respect of the thickness of the second insulating layer 122; and accordingly, the thickness of the first insulating layer 121 was different. Specific parameters may be shown in Table 1.

### Embodiments 7-8

Embodiments 7-8 differed from Embodiment 1 in respect of the mass ratio of the thermoplastic polymer to the binder. In Embodiments 7-8, the mass ratios of the thermoplastic polymer to the binder were 70:30 and 60:40, respectively.

### Embodiments 9-10

Embodiments 9-10 differed from Embodiment 8 in respect of the material of the thermoplastic polymer in the second insulating layer 122. In the second insulating layer 122, the materials of the thermoplastic polymer were polypropylene and polyamide, respectively.

In Embodiments 1-10, the electrode sheet 1 was manufactured by using the manufacturing method 200. The thickness d1 of the first insulating layer 121 was related to the thickness d2 of the second insulating layer 122, and the thickness d2 of the second insulating layer 122 may be shown in Table 1.

### Embodiments 11-13

In Embodiments 11-12, the first insulating layer 121 and the second insulating layer 122 were prepared by means of the hot-melt tool. Specifically, after the current collector 10 provided with the active material layer 11 was cut along the cutting line, the hot-melt tool internally filled with the thermoplastic polymer was used to respectively coat the end surface 1011a and the second area (corresponding to the transition area and the partial area of the tab, and for details, see the above description) with the thermoplastic polymer to prepare the first insulating layer 121 and the second insulating layer 122 with corresponding thicknesses.

In Embodiment 13, the first insulating layer 121 was prepared by means of the hot-melt tool. Specifically, after the current collector 10 provided with the active material layer 11 and the second insulating layer 122 was cut along the cutting line, the hot-melt tool internally filled with the thermoplastic polymer was used to coat the end surface 1011a with the thermoplastic polymer to prepare the first insulating layer 121 with a corresponding thickness. The second insulating layer 122 comprised boehmite, and the second insulating layer 122 was formed by coating the second area of the current collector 10 with a slurry comprising boehmite.

### Comparative Example 1

In Comparative Example 1, the material of the second insulating layer comprised boehmite, and the first insulating layer was not provided at the end surface 1011a.

### Comparative Example 2

In Comparative Example 2, the thickness of the second insulating layer was 19 µm, and the thickness of the first insulating layer was 190 nm.

### Comparative Example 3

In Comparative Example 3, the thickness of the second insulating layer was 51 µm, and the thickness of the first insulating layer was 2100 nm.

In Comparative Examples 1-3, the electrode sheet was manufactured by the same method as in Embodiment 1, wherein specific materials and cutting materials may be different, which may be shown in Table 1 for details.

In Table 1, d1 was the thickness of the first insulating layer 121, d2 was the thickness of the second insulating layer 122, and A:B was the mass ratio of the thermoplastic polymer to the binder in the second insulating layer. "same process" indicated whether the first insulating layer and the second insulating layer were manufactured in the same process. In Table 1, "Yes" indicated that the first insulating layer and the second insulating layer were manufactured in the same process, and "No" indicated that the first insulating layer and the second insulating layer were manufactured in different processes.

**Table 1 Parameters in Embodiments and Comparative Examples**

| | first insulating layer | | | second insulating layer | | | | cutting parameters | | |
|---|---|---|---|---|---|---|---|---|---|---|
| | material | d1/nm | same process (Yes/No) | d2/µm | thermoplastic polymer | | A:B | power/W | frequency/ kHz | belt conveying speed/m/min |
| | | | | | material | drop melting point/°C | | | | |
| Embodiment 1 | microcrystalline wax | 200 | No | 20 | microcrystalline wax | 80 | 80:20 | 20 | 100 | 30 |
| Embodiment 2 | microcrystalline wax | 300 | No | 25 | microcrystalline wax | 80 | 80:20 | 20 | 100 | 30 |
| Embodiment 3 | microcrystalline wax | 500 | No | 30 | microcrystalline wax | 80 | 80:20 | 20 | 100 | 30 |
| Embodiment 4 | microcrystalline wax | 1000 | No | 35 | microcrystalline wax | 80 | 80:20 | 20 | 100 | 30 |
| Embodiment 5 | microcrystalline wax | 1500 | No | 40 | microcrystalline wax | 80 | 80:20 | 20 | 100 | 30 |
| Embodiment 6 | microcrystalline wax | 2000 | No | 50 | microcrystalline wax | 80 | 80:20 | 20 | 100 | 30 |
| Embodiment 7 | microcrystalline wax | 200 | No | 30 | microcrystalline wax | 80 | 70:30 | 20 | 100 | 30 |
| Embodiment 8 | microcrystalline wax | 200 | No | 30 | microcrystalline wax | 80 | 60:40 | 20 | 100 | 30 |
| Embodiment 9 | polypropylene | 200 | No | 30 | polypropylene | 150 | 60:40 | 100 | 300 | 15 |
| Embodiment 10 | polyamide | 200 | No | 50 | polyamide | 200 | 60:40 | 200 | 800 | 5 |
| Embodiment 11 | microcrystalline wax | 200 | Yes | 19 | microcrystalline wax | 80 | 80:20 | 20 | 100 | 30 |
| Embodiment 12 | microcrystalline wax | 2000 | Yes | 51 | microcrystalline wax | 80 | 80:20 | 210 | 900 | 5 |
| Embodiment 13 | microcrystalline wax | 200 | No | 20 | boehmite | / | 80:20 | 20 | 100 | 30 |
| Comparative Example 1 | / | / | / | 20 | boehmite | / | 80:20 | 20 | 100 | 30 |
| Comparative Example 2 | microcrystalline wax | 190 | No | 19 | microcrystalline wax | 80 | 80:20 | 20 | 100 | 30 |
| Comparative Example 3 | polyamide | 2100 | No | 51 | polyamide | 200 | 80:20 | 210 | 900 | 5 |

**Table 2 Experimental Results of Comparative Examples and Embodiments**

| | the number of burrs after die cutting | does overlapping a fully charged anode catch fire? | self-discharge test | is there a polymer on the end surface? |
|---|---|---|---|---|
| Embodiment 1 | qualified | no fire | qualified | Yes |
| Embodiment 2 | qualified | no fire | qualified | Yes |
| Embodiment 3 | qualified | no fire | qualified | Yes |
| Embodiment 4 | qualified | no fire | qualified | Yes |
| Embodiment 5 | qualified | no fire | qualified | Yes |
| Embodiment 6 | qualified | no fire | qualified | Yes |
| Embodiment 7 | qualified | no fire | qualified | Yes |
| Embodiment 8 | qualified | no fire | qualified | Yes |
| Embodiment 9 | qualified | no fire | qualified | Yes |
| Embodiment 10 | qualified | no fire | qualified | Yes |
| Embodiment 11 | qualified | no fire | qualified | Yes |
| Embodiment 12 | qualified | no fire | qualified | Yes |
| Embodiment 13 | qualified | no fire | qualified | Yes |
| Comparative Example 1 | qualified | fire | qualified | No |
| Comparative Example 2 | qualified | fire at partial position | qualified | Yes |
| Comparative Example 3 | unqualified | no fire | unqualified | Yes |

### [Manufacturing of Battery Cell]

### (1) Configuration of Coating Slurry

The thermoplastic polymer and the binder are mixed in a certain ratio, and a solvent is added and stirred evenly. The slurry viscosity is about 3000 mPa·s. The binder is polyvinylidene fluoride PVDF, and the solvent is nitrogen methyl pyrrolidone. The specific thermoplastic polymer and ratio of the thermoplastic polymer to the binder may be shown in Table 1.

### (2) Coating and Drying

An aluminum foil is coated with a positive electrode active slurry to manufacture an active material layer, wherein the positive electrode active material in the positive electrode active slurry is LiNi_{0.8}Co_{0.1}Mn_{0.1}O₂(NCM811), the aluminum foil is coated with the above insulating coating slurry with a coating width of 3 mm. After drying in an oven at a drying temperature of 100°C, the thickness of the second insulating layer after drying is shown in Table 1. Here, the thickness of the second insulating layer means the thickness of the second insulating layer on a single side of the current collector.

### (3) Laser Die Cutting

The above product is die cut, and the specific process parameters are seen in Table 1.

### (4) Making of Battery Cell

The above positive electrode sheet is assembled into a lithium battery cell together with other assemblies required for the battery: the negative electrode sheet, the separation film, and the electrolyte solution.

It should be noted that, the method for manufacturing the battery cell above is applicable to Embodiments 1-10 of the present application, and for manufacturing of Embodiments 11-13, reference may be made to the above description, which will not be repeated here.

### [Confirmation of First Insulating Layer]

The end surface is observed with a scanning electron microscope (SEM) to see if the first insulating layer is present at the end surface, and moreover, the thickness of the first insulating layer may also be observed through a photograph taken with the scanning electron microscope.

### [Confirmation of Second Insulating Layer]

The surface of the electrode sheet is observed with the scanning electron microscope to see if the second insulating layer is present on the surface. The electrode sheet is cut open, the cross section of the electrode sheet is photographed with the scanning electron microscope, and the thickness of the second insulating layer is observed according to the photographed photograph.

### [Number of Burrs]

A charge coupled device (CCD) is used to observe whether the number of burrs on the end surface after laser die-cutting is qualified.

In a case where the number of burrs with a size of 30 µm to 40 µm is less than or equal to 10, and the maximum size of the burrs is less than or equal to 40 µm, it means that the number of burrs is qualified.

### [Test of Overlapping Fully Charged Anode]

The end surface after laser die-cutting is used to overlap with a fully charged anode, and whether there is a fire is observed.

### [Self-discharge Test]

The battery is adjusted to 80% SOC and then stored for 48 hours. the voltage before storage is V1, the voltage after storage is V2, and k=(V1-V2)/48,

where k is used to characterize the self-discharge performance of the battery, and when k≤0.2mV/h, it indicates that the self-discharge test is passed.

### [Confirmation of Drop Melting Point of Thermoplastic Polymer]

The drop melting point of the thermoplastic polymer can be determined by GB/T8026-2014. For example, a cooled temperature sensor is vertically immersed in a sample so that the sample adheres to the temperature sensor, and then the sensor is placed in a test tube and heated at a required rate of temperature increase to start melting the sample, until a first drop of the sample on the sensor drops, at which time the temperature of the sensor is the drop melting point of the sample.

As another example, the drop melting point of the thermoplastic polymer can be determined according to the specific thermoplastic polymer after the specific type of the thermoplastic polymer. As an example, for a crystalline thermoplastic polymer, the drop melting point refers to the melting point of the crystalline thermoplastic polymer; for an amorphous thermoplastic polymer, the drop melting point refers to the glass transition temperature of the amorphous thermoplastic polymer.

### [Mass Ratio of Thermoplastic Polymer to Binder]

The mass ratio of the thermoplastic polymer to the binder can be obtained according to the mass of the thermoplastic polymer and the mass of the binder added during the manufacturing process.

FIG. 13 is an SEM view of an end surface on which a first insulating layer is provided according to one embodiment of the present application. Referring to FIG. 13, a first insulating layer 121 is provided at an end surface of the electrode sheet.

Referring to Embodiments 1-13 and Comparative Example 1, the first insulating layer is provided at an end surface of the electrode sheet, and after the end surface of the electrode sheet overlaps with the fully charged anode, no fire will occur, and thus the technical solutions of the embodiments of the present application can improve the reliability of the battery cell.

Referring to Embodiments 1-6 and Comparative Example 2, when the fully charged anode is overlapped, the battery cell in Embodiments 1-6 does not catch fire, while there is a fire in Comparative Example 2. Through the reasonable setting of the thickness of the second insulating layer, a relatively uniform first insulating layer of a relatively suitable thickness can be obtained. This helps to improve the reliability of a battery cell.

Referring to Embodiments 1-6 and Comparative Example 3, although a thicker second insulating layer is advantageous for obtaining a relatively uniform first insulating layer of a suitable thickness, since the second insulating layer is thicker, more burrs are generated during the cutting process, and a self-discharge abnormality and other phenomena will occur.

Referring to Embodiments 7-8, the thermoplastic polymer and the binder in the second insulating layer are reasonable set to suit a variety of different mass ratios.

Referring to Embodiments 9-10, the thermoplastic polymer in the second insulating layer may be of a variety of materials.

Referring to Embodiments 1-6 and 11-12, the first insulating layer and the second insulating layer are manufactured by using the hot-melt tool. Although the thickness of the second insulating layer exceeds 50 µm, since the aluminum foil is cut during cutting, there will not be a large number of burrs due to the large thickness of the second insulating layer; the thickness of the second insulating layer is less than 20 µm, and since the first insulating layer is not formed by melting and then solidifying the thermoplastic polymer in the second insulating layer, the phenomenon of fire at a partial position when the fully charged anode is overlapped will not occur. Referring to Embodiments 11-13, the electrode sheet according to the embodiments of the present application may be manufactured by multiple methods.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the implementations are also included in the scope of the present application.

## Claims

1. An electrode sheet, comprising a current collector, an active material layer, and a first insulating layer,
wherein the current collector comprises a main body part and a tab extending from a first end of the main body part, the first end being the end of the main body part in a first direction, the main body part comprising a coating area;
the active material layer is arranged on a surface of the coating area; and
the first insulating layer is arranged on an end surface of the main body part at the first end, and has a thickness d1 of 200 nm to 2000 nm.

2. The electrode sheet according to claim 1, wherein the thickness d1 of the first insulating layer ranges from 200 nm to 500 nm.

3. The electrode sheet according to claim 1 or 2, wherein the main body part further comprises a transition area arranged between the coating area and the tab; and
the electrode sheet further comprises a second insulating layer, at least a part of the second insulating layer being disposed on a surface of the transition area, the material of the second insulating layer comprising a thermoplastic polymer.

4. The electrode sheet according to claim 3, wherein the thickness d2 of the second insulating layer ranges from 20 µm to 50 µm.

5. The electrode sheet according to claim 3 or 4, wherein the thermoplastic polymer has a drop melting point of 80°C to 200°C.

6. The electrode sheet according to any one of claims 3-5, wherein the thermoplastic polymer comprises at least one of a crystalline thermoplastic polymer and an amorphous thermoplastic polymer; the crystalline thermoplastic polymer comprises at least one of polyethylene, polypropylene, and polyamide; and the amorphous thermoplastic polymer comprises at least one of microcrystalline wax, polystyrene, and polymethyl methacrylate.

7. The electrode sheet according to any one of claims 3-6, wherein the second insulating layer further comprises a binder.

8. The electrode sheet according to claim 7, wherein the mass ratio A:B of the thermoplastic polymer to the binder in the second insulating layer is 60:40 to 80:20.

9. The electrode sheet according to any one of claims 3-8, wherein the second insulating layer comprises a first portion disposed on the surface of the transition area and a second portion extending from the first portion in the first direction and disposed on a part of a surface of the tab.

10. The electrode sheet according to claim 9, wherein end surfaces at both ends of an area of the tab in which the second portion is provided are provided with the first insulating layer in a second direction which is different from the first direction.

11. The electrode sheet according to any one of claims 3-10, wherein the material of the first insulating layer is the same as that of the thermoplastic polymer in the second insulating layer.

12. The electrode sheet according to any one of claims 3-11, wherein the thermoplastic polymer in the first insulating layer is film-layered, and the thermoplastic polymer in the second insulating layer comprises a film-layered thermoplastic polymer and a granular thermoplastic polymer.

13. The electrode sheet according to any one of claims 1-12, the current collector comprises an aluminum foil.

14. The electrode sheet according to any one of claims 1-13, wherein the first insulating layer is further provided on an end surface of the main body part at a second end which is opposite to the first end in the first direction.

15. A manufacturing method for an electrode sheet, comprising:
providing a current collector;
coating a first area of the current collector with an active material to form an active material layer in the first area;
coating a second area of the current collector with an insulating slurry to form a second insulating layer in the second area, the insulating slurry comprising a thermoplastic polymer and a binder, and having a thickness d2 of 20 µm to 50 µm; and
cutting the current collector provided with the second insulating layer along a cutting line, at least a part of the cutting line being disposed in the second area.

16. The method according to claim 15, wherein the thickness d2 of the second insulating layer ranges from 20 µm to 30 µm.

17. The method according to claim 15 or 16, wherein the thermoplastic polymer has a drop melting point of 80°C~200°C.

18. The method according to any one of claims 15-17, wherein the material of the thermoplastic polymer comprises at least one of a crystalline thermoplastic polymer and an amorphous thermoplastic polymer; the crystalline thermoplastic polymer comprises at least one of polyethylene, polypropylene, and polyamide; and the amorphous thermoplastic polymer comprises at least one of microcrystalline wax, polystyrene, and polymethyl methacrylate.

19. The method according to any one of claims 15-18, wherein the mass ratio A:B of the thermoplastic polymer to the binder in the insulating slurry is 60:40 to 80:20.

20. The method according to any one of claims 15-19, wherein the cutting the current collector provided with the second insulating layer along a cutting line comprises:
controlling a laser processing tool to cut the current collector provided with the second insulating layer along the cutting line, wherein the laser processing tool has a power of 20 to 200 W, a frequency of 100 to 800 kHz, and a feed speed of 5 m/min to 30 m/min.

21. A battery cell, comprising the electrode sheet according to any one of claims 1-14 and/or the electrode sheet manufactured by the method according to any one of claims 15-20.

22. A battery, comprising the battery cell according to claim 21.

23. An electric device, comprising the battery according to claim 22.

24. An electrode sheet, comprising a current collector and a first insulating layer,
wherein the first insulating layer is arranged on at least a part of an end surface of the current collector, and has a thickness d1 of 200 nm to 2000 nm.
